Europäisches Patentamt

European Patent Office

Office européen des brevets

(19)

(11) Numéro de publication : **0 060 209**
**B1**

(12)

# FASCICULE DE BREVET EUROPÉEN

(45) Date de publication du fascicule du brevet :
**07.05.86**

(51) Int. Cl.⁴ : **B 60 F 3/00**, B 62 D 55/04,
B 62 D 61/12, B 62 D 53/02

(21) Numéro de dépôt : **82440005.5**

(22) Date de dépôt : **24.02.82**

(54) **Véhicule automobile tout-terrain et amphibie.**

(30) Priorité : **27.02.81 FR 8104379**
**29.06.81 FR 8113058**

(43) Date de publication de la demande :
**15.09.82 Bulletin 82/37**

(45) Mention de la délivrance du brevet :
**07.05.86 Bulletin 86/19**

(84) Etats contractants désignés :
**AT BE CH DE GB IT LI LU NL SE**

(56) Documents cités :
**FR-A- 1 140 180**
**FR-A- 1 197 800**
**FR-A- 1 339 378**
**FR-A- 1 448 586**
**FR-A- 1 480 408**
**FR-A- 1 525 912**
**FR-A- 2 348 830**
**FR-A- 2 366 981**
**FR-A- 2 454 949**
**GB-A- 477 798**
**GB-A- 1 133 976**
**GB-A- 1 138 109**
**US-A- 2 992 862**
**US-A- 3 062 327**
**US-A- 3 452 702**
**US-A- 3 921 743**
**US-A- 3 976 153**

(73) Titulaire : **Hildebrand, Georges**
**2, rue Heckler**
**F-67000 Strasbourg (FR)**

(72) Inventeur : **Hildebrand, Georges**
**2, rue Heckler**
**F-67000 Strasbourg (FR)**

(74) Mandataire : **Nuss, Pierre**
**10, rue Jacques Kablé**
**F-67000 Strasbourg (FR)**

Jouve, 18, rue St-Denis, 75001 Paris, France

## Description

La présente invention concerne le domaine de la construction de véhicules automobiles, en particulier de véhicules spéciaux tels que les véhicules tout-terrain et/ou amphibies, et a pour objet un tel véhicule capable de se mouvoir aussi bien sur route que sur sol meuble, sur la neige et sur l'eau réalisé par transformation d'un véhicule automobile classique.

Il existe actuellement de tels véhicules munis, soit de chenilles, soit de plus de quatre roues, soit de roues et de chenilles, capables de se déplacer aussi bien sur un sol ferme que sur un sol meuble, ou sur un terrain très accidenté, ou enneigé, ou encore sur l'eau.

Toutefois, ces véhicules sont généralement conçus pour une seule, voire au maximum pour deux de ces fonctions et ne peuvent pas être transformés pour une adaptation aux autres fonctions, de sorte qu'ils sont forcément limités dans leur prestation, et qu'ils ne peuvent être utilisés que de manière saisonnière.

Ainsi, en particulier, GB-A-477 798 décrit un véhicule automobile tout terrain et amphibie, qui est pourvu de deux essieux, dont l'un est moteur, et d'essieux supplémentaires à roues indépendantes pouvant être relevées en cas de non-utilisation, une chenille étant tendue sur les roues de ces essieux de chaque côté du véhicule.

Cependant, le véhicule décrit dans ce brevet est un véhicule spécifique carrossé de façon étanche pour assurer sa flottabilité, et les essieux supplémentaires l'équipant sont montés à l'intérieur de sa carrosserie de manière non démontable, de sorte qu'une utilisation comme véhicule automobile classique est inconcevable. En outre, dans ce véhicule, les chenilles sont montées uniquement sur les roues des essieux supplémentaires et leur entraînement est effectué indépendamment de celui des autres roues, nécessitant ainsi une boîte de vitesse auxiliaire.

La présente invention a pour but de pallier ces inconvénients.

Elle a, en effet, pour objet un véhicule automobile tout-terrain et amphibie muni d'au moins deux essieux, dont l'un au moins est moteur, et pourvu d'un ou de plusieurs essieux supplémentaires à roues indépendantes pouvant être relevés en cas de non-utilisation, une chenille étant tendue sur au moins une paire de roues de chaque côté du véhicule, caractérisé en ce qu'il est réalisé par transformation temporaire d'un véhicule automobile classique, en ce que les moyeux de chaque train de roues reliées par une chenille sont reliés entre eux par une poutrelle articulée, lesdits moyeux étant montés oscillants autour des axes des essieux ou présentant une certaine flexibilité, en ce que les roues motrices du véhicule sont pourvues d'un bandage présentant un relief coopérant avec un relief correspondant à l'intérieur des chenilles, qui sont amovibles en vue d'une transformation en véhicule tout-terrain non chenillé, et en ce qu'il est muni sous son châssis, à ses parties avant et arrière, ainsi que sur les côtés d'éléments gonflables pouvant servir de flotteurs.

Conformément à une variante de réalisation de l'invention, les essieux supplémentaires constituent avec deux longerons, un faux-châssis pouvant être fixé de manière démontable sous le châssis du véhicule, les moyeux d'au moins l'un des deux essieux d'extrémité étant munis chacun d'un barbotin entraîné avec démultiplication par la roue motrice correspondante par l'intermédiaire d'un embrayage et d'un jeu de roues à chaînes et de chaînes, ou de poulies et de courroies montés sur une genouillère, ou de renvois d'angle avec arbre télescopique, ou directement par un moteur indépendant électrique, pneumatique ou hydraulique pour chaque barbotin.

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :

la figure 1 est une vue en élévation latérale d'un véhicule conforme à l'invention ;

la figure 2 est une vue partielle en plan et en coupe montrant la disposition des essieux et l'entraînement de la chenille et des roues ;

la figure 3 est une vue en élévation frontale du véhicule conforme à l'invention en version surélevée, muni d'éléments gonflables, l'élément du côté gauche étant en position dégonflée et rétractée ;

la figure 4 est une vue en plan correspondant à la figure 3 ;

les figures 5 à 8 représentent, dans des vues en élévation latérales, divers modes de réalisation du véhicule conforme à l'invention ;

la figure 9 est une vue en élévation latérale d'une variante de réalisation du véhicule conforme à l'invention, et

la figure 10 est une vue partielle en plan du faux-châssis du véhicule de la figure 9.

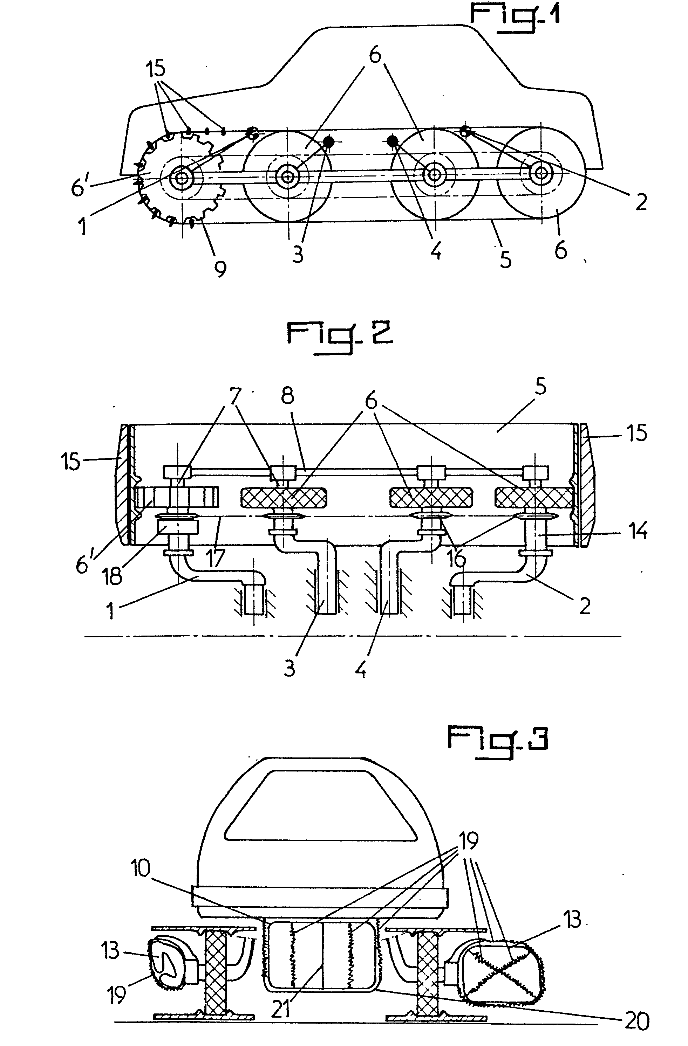

Conformément à l'invention, et comme le montrent plus particulièrement, à titre d'exemple, les figures 1 à 4 des dessins annexés, le véhicule automobile tout-terrain et amphibie muni d'au moins deux essieux 1 et 2 dont l'un, 1, est moteur, et réalisé par transformation d'un véhicule automobile classique, est pourvu de deux essieux supplémentaires 3 et 4 à roues indépendantes, une chenille 5 étant tendue sur les roues 6 de chaque côté du véhicule, est caractérisé en ce que les moyeux 7 de chaque train de roues 6 sont reliés entre eux par une poutrelle 8 articulée ou présentant une certaine flexibilité, et ces moyeux 7 sont montés oscillants autour des axes des essieux 3 et 4, et en ce que les roues motrices 6' du véhicule sont munies chacune d'un bandage 9, qui présente un relief coopérant avec un relief correspondant de l'intérieur des chenilles 5. Pour son utilisation comme véhicule amphibie, le véhicule conforme à l'invention est muni, en outre, sous son châssis, à ses parties avant et arrière, ainsi que sur ses côtés d'éléments gonflables 10 à 13 servant de flotteurs après gonflage. Les chenilles 5 sont avantageusement amovibles en vue d'une transformation du véhicule en tout-terrain non chenillé.

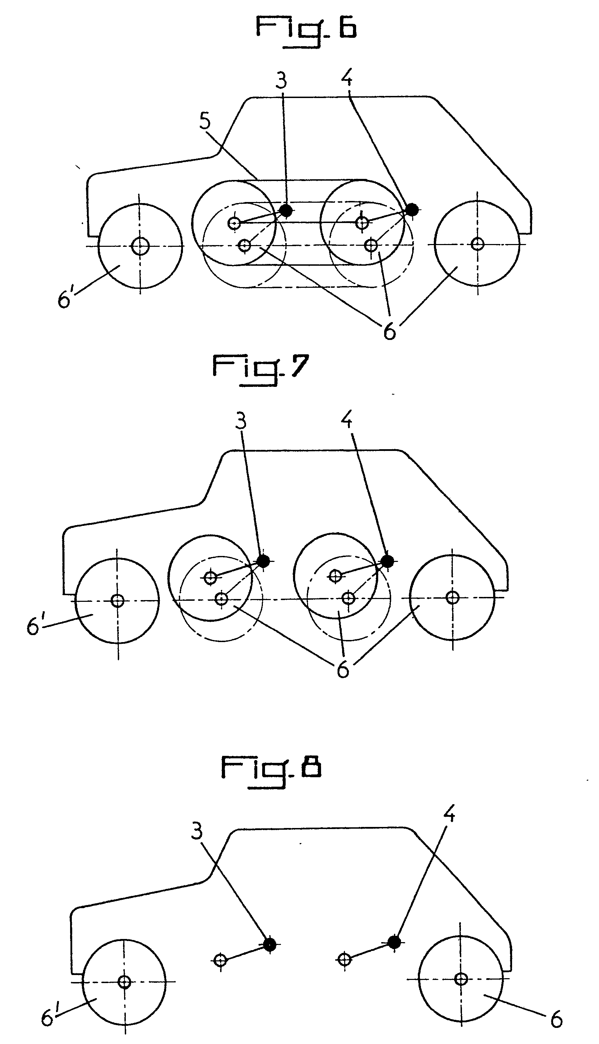

Les essieux supplémentaires 3 et 4 sont destinés à assurer la tension des chenilles 5 et à soulager les essieux d'origine 1 et 2, et ils peuvent être relevés en cas de non-utilisation (figure 6), par exemple sur sol ferme, et leurs roues 6 peuvent être enlevées dans cette position, de sorte que le véhicule peut être utilisé dans la configuration habituelle des véhicules automobiles, comme représenté sur la figure 8.

En vue de présenter une meilleure assise, en particulier sur terrain meuble, la voie du véhicule conforme à l'invention peut être augmenté par adjonction au moyeu 7 de chaque roue 6 d'une entretoise 14.

Les chenilles 5 sont avantageusement constituées chacune par une toile plastifiée ou caoutchoutée armée à haute résistance munie à intervalles réguliers de traverses 15 réalisant l'accrochage des chenilles 5 sur le sol, ou encore la propulsion sur l'eau, et leur barrette intérieure de fixation sur les chenilles 5 peuvent coopérer à l'entraînement avec les bandages 9 des roues motrices 6'. Ces bandages 9 peuvent avantageusement être réalisés sous forme d'enveloppes de pneumatiques spéciaux, connues sur le marché. Cet entraînement pourrait également s'effectuer au moyen de flasques dentés ou crantés solidaires des roues 6', non représentés, présentant un profil analogue à celui des bandages 9, et coopérant avec lesdites barrettes intérieures des traverses 15, qui présentent, de préférence une section longitudinale trapézoïdale.

Pour assurer une meilleure transmission du couple moteur, les roues motrices 6' peuvent être accouplées avec les autres roues 6 par l'intermédiaire de roues dentées 16 et de chaînes 17 ainsi que d'un embrayage 18 prévu sur l'essieu moteur 1. Il est également possible d'assurer cet accouplement des roues au moyen de courroies ou de trains d'engrenages, ou au moyen de renvois d'angle et de cardans. L'entraînement des autres roues peut aussi être effectué directement par un moteur indépendant pour chaque roue, ou encore par liaison des essieux par un arbre de transmission.

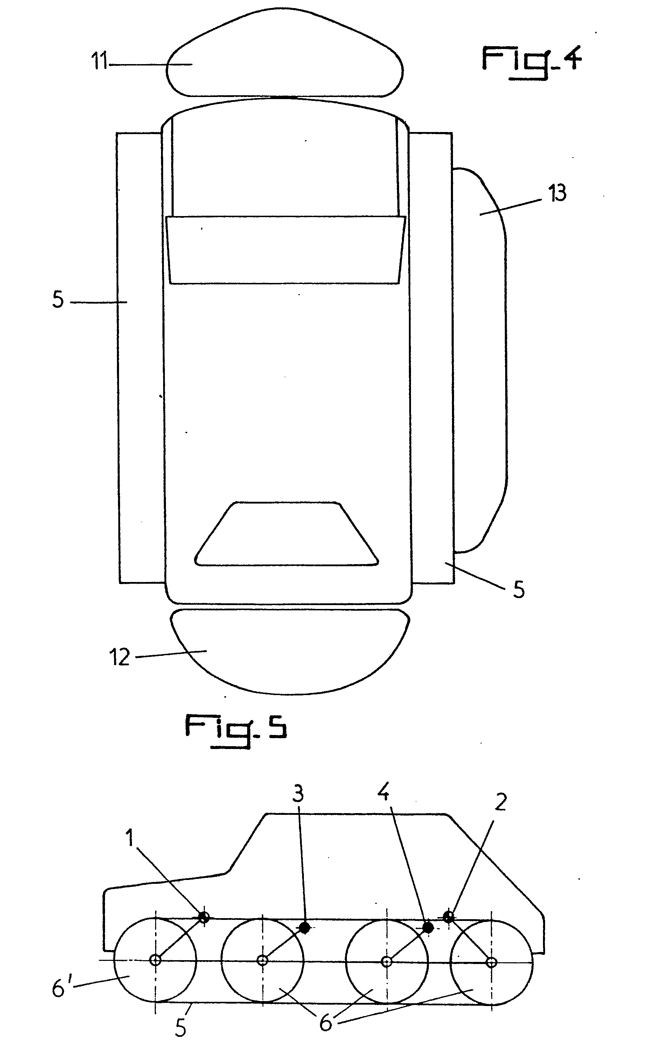

Les éléments gonflables 10 à 13, représentés plus spécialement aux figures 3 et 4, assurent la flottabilité du véhicule sur l'eau tout en permettant le roulage. Ces éléments sont généralement gonflés au moyen d'une pompe, d'un compresseur, ou encore des gaz d'échappement grâce à un dispositif de captation adapté, et leur dégonflage s'effectue, soit simplement au moyen de valves, soit par utilisation d'un tube Venturi coopérant avec les gaz d'échappement pour créer un effet de succion.

La rétraction de ces éléments 10 à 13 en position de non-utilisation est avantageusement réalisée au moyen d'éléments élastiques de traction 19 disposés à l'intérieur et autour desdits éléments 10 à 13.

Afin d'assurer la protection de l'élément gonflable central 10, il est prévu une plaque rigide 20, dont les bords sont relevés, en particulier à l'avant et à l'arrière, et qui prend ledit élément en sandwich entre lui et le châssis du véhicule proprement dit. Grâce à cette constitution, le bas du véhicule est protégé, et dans des cas d'enlisement extrême, il est possible de soulager l'ensemble de propulsion. En outre, selon une autre caractéristique de l'invention, l'élément central 10 est avantageusement constitué par deux compartiments séparés par une paroi centrale longitudinale 21 permettant, par un surgonflage de l'un des compartiments, le soulèvement du train de roues associé et/ou de la chenille, de sorte que les travaux de montage et de démontage, ainsi que le dépannage sont facilités.

Dans sa version entièrement chenillée représentée aux figures 1 à 5, la direction du véhicule s'effectuera, de manière connue en soi, par freinage de la ou des roues d'entraînement d'un côté, par exemple au moyen de mécanismes à commande par leviers connus, ou encore au moyen d'un volant de direction spécial.

La figure 6 représente un autre mode de réalisation de l'invention dans lequel seul les roues 6 des essieux supplémentaires 3 et 4 sont munies de chenilles 5 pour une utilisation sur sol meuble ou comme véhicule amphibie, ces essieux pouvant être relevés ensemble avec les chenilles pour une utilisation sur sol ferme comme véhicule classique. Dans ce mode de réalisation, la direction du véhicule peut s'effectuer au moyen du train avant avec action de freinage éventuelle sur l'une ou l'autre chenille.

La figure 7 représente un mode de réalisation analogue à celui de la figure 6, sans chenille, les roues 6 des essieux supplémentaires 3 et 4 pouvant être abaissées et relevées en cas de besoin, et être freinées individuellement pour une assistance éventuelle à la direction.

Conformément à une autre caractéristique de l'invention, représentée dans les figures 3 et 4, les roues 6 peuvent également être disposées sous le châssis du véhicule, de manière à surélever ce dernier et à obtenir une voie étroite, ainsi que pour obtenir, en cas d'utilisation amphibie, une surélévation de l'habitacle par rapport à la ligne de flottaison.

Pour les évolutions sur l'eau, il peut être prévu d'équiper le véhicule d'un puits de fixation d'un moteur hors-bord, ou encore d'un arbre à hélice.

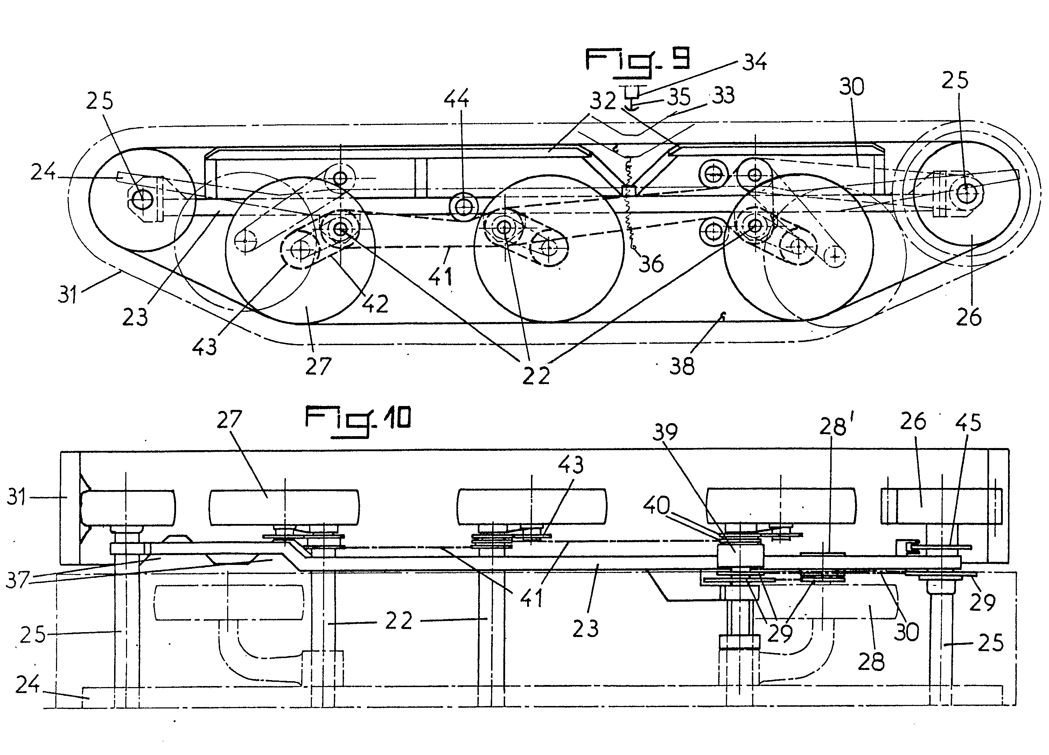

Les figures 9 et 10 représentent une variante de réalisation de l'invention, dans laquelle les essieux supplémentaires 22 et 25 constituent avec deux longerons 23 un faux-châssis, qui peut être fixé de manière démontable sous le châssis 24 (représenté en traits mixtes fins). Sur les extrémités de ce faux-châssis sont montés les essieux 25 dont les axes sont plus hauts que ceux des essieux 22 et dont l'un au moins est pourvu de barbotins 26 entraînés avec démultiplication par la roue motrice correspondante 28 du véhicule par l'intermédiaire d'un embrayage 28′ et d'un jeu de roues à chaînes 29 et de chaînes 30, l'axe des roues de renvoi coïncidant avec celui de l'essieu de la roue motrice 28, de telle sorte que le débattement de la roue motrice ne modifie pas la tension des chaînes. L'entraînement pourrait également être effectué au moyen de poulies et de courroies, ou de renvois d'angle avec arbre télescopique, ou directement par un moteur indépendant électrique, pneumatique ou hydraulique pour chaque barbotin 26.

Les roues 27 des essieux 22 sont à suspension indépendante, et les essieux 22 peuvent être pivotés en positions d'utilisation et de non-utilisation sur le faux-châssis par un dispositif de basculement verrouillable connu en soi.

En position d'utilisation tout-terrain chenillée, la chenille 31, s'étendant sur les roues 27 et sur les barbotins 26, est tendue par lesdites roues 27, et elle présente une section longitudinale trapézoïdale permettant une meilleure pénétration dans la neige profonde ou sur sol très meuble, ainsi qu'un débattement indépendant de chaque roue, permettant au brin inférieur de la chenille d'épouser le relief du terrain. En outre, dans cette position, la partie supérieure de la chenille 31 est soutenue par des supports longitudinaux de glissement 32. Ces supports 32 présentent, entre deux essieux 22 un espace permettant le passage du mou 33 de la chenille 31 en position relevée de cette dernière (en traits fins dans la figure 9). De plus, pour le cas d'utilisation en véhicule amphibie, les supports 32 servent à la fixation des flotteurs.

Pour rattraper le mou en position de non-utilisation des chenilles, il est prévu, conformément à l'invention, un dispositif 34 d'appui sur les chenilles par le haut entre deux roues 22, tel qu'un vérin, coopérant avec des taquets 35 de maintien de la chenille, ces taquets pouvant être commandés manuellement ou par vérins, et un dispositif annexe de rattrapage de mou, tel qu'un élément élastique 36, ou un tendeur mécanique, peut encore être fixé entre les brins des chenilles 31.

Les essieux 25 sont fixés de manière démontable sur le faux-châssis, avec un dispositif de tension permettant de régler la tension de la chaîne de transmission 30, et de la chenille 31.

En position de non-utilisation, une ou deux encoches 37 pratiquées dans les chenilles 31 permettent la libre orientation des roues de direction, et ces encoches peuvent être réglées en position grâce à deux repères 38 matérialisés sur la face intérieure de chaque chenille, et qui doivent être mis en correspondance au niveau du rattrapage du mou, ces repères pouvant être combinés avec des moyens d'accrochage de l'élément 36, ou analogue.

Conformément à une variante de réalisation de l'invention, pour une utilisation en tout-terrain non chenillé, c'est-à-dire les chenilles 31 étant démontées, les roues 27 sont entraînées par l'intermédiaire d'un embrayage 39 et d'un jeu de roues à chaînes jumelées 40 dont l'une est commandée par un jeu de chaînes 41 entraînées par l'intermédiaire de l'embrayage 39 par l'arbre moteur, et l'autre est reliée par une chaîne 42 à une roue à chaîne 43 solidaire de la roue 27, les chaînes 41 étant tendues au moyen de tendeurs 44, et le débattement des roues intermédiaires 27 restant totalement indépendant (figure 9).

Selon une autre caractéristique de l'invention, l'essieu 25 des barbotins 26 formant l'arbre moteur est avantageusement muni de freins 45 à disque ou à tambour pouvant être actionnés séparément, à partir du poste de pilotage, permettant de réaliser la direction du véhicule en configuration tout-terrain, et servant de frein de sécurité en cas de rupture de la chaîne cinématique d'entraînement.

Conformément à une autre caractéristique de l'invention, les moyeux des roues supplémentaires 27 et les moyeux des barbotins 26 peuvent être équipés de roues multiples ou de roues à bandage très large pour augmenter la surface de contact au sol, ou pour augmenter la flottabilité et la propulsion sur l'eau.

Grâce à l'invention, il est possible de réaliser un véhicule polyvalent pouvant être utilisé de manière continue quelles que soient les conditions de terrain par simple relevage ou abaissement des roues supplémentaires, et/ou gonflage ou dégonflage des éléments gonflables, et/ou adjonction ou démontage de différents organes accessoires.

En outre, il est possible de réaliser un tel véhicule par adjonction des organes accessoires, tels que essieux supplémentaires, chenilles, éléments gonflables et éléments de transmission annexes, à l'infrastructure d'un véhicule automobile classique, en particulier par simple adaptation du faux-châssis sous le châssis existant sans modification de la superstructure existante.

**Revendications**

1. Véhicule automobile tout-terrain et amphibie muni d'au moins deux essieux (1, 2), dont l'un au moins (1) est moteur, et pourvu d'un ou plusieurs essieux supplémentaires (3, 4), à roues indépendantes (6) pouvant être relevées et étant amovibles en cas de non-utilisation, une chenille (5) étant tendue sur au moins une paire de roues (6) de chaque côté du véhicule, caractérisé en ce qu'il est réalisé par transformation temporaire d'un véhicule automobile classique, en ce que les moyeux (7) de chaque train de roues (6) reliées par une chenille (5) sont reliés entre eux par une poutrelle (8) articulée ou présentant une certaine flexibilité, ces moyeux (7) étant montés oscillants autour des axes des essieux (3, 4), en ce que les roues motrices (6′) du véhicule sont pourvues d'un bandage (9) présentant un relief coopérant avec un relief correspondant de l'intérieur des chenilles (5), qui sont amovibles en vue d'une transformation en véhicule tout-terrain chenillé, et en ce qu'il est muni sous son châssis, à ses parties avant et arrière, ainsi que sur les côtés d'éléments gonflables (10 à 13) pouvant servir de flotteurs.

2. Véhicule, suivant la revendication 1, caractérisé en ce que sa voie est augmentée par adjonction d'une entretoise (14) au moyeu (7) de chaque roue (6).

3. Véhicule, suivant la revendication 1, caractérisé en ce que les chenilles (5) sont avantageusement constituées chacune par une toile plastifiée ou caoutchoutée armée à haute résistance munie à intervalles réguliers de traverses (15), de préférence de section longitudinale trapézoïdale, réalisant l'accrochage des chenilles (5) sur le sol, ou encore la propulsion sur l'eau, et leur barrette intérieure de fixation sur les chenilles (5) peuvent coopérer à l'entraînement avec les bandages (9) des roues motrices (6), ces bandages (9) pouvant avantageusement être réalisés sous forme d'enveloppes de pneumatiques spéciaux, ou de barbotins, ou de flasques dentés ou crantés solidaires des roues motrices (6').

4. Véhicule, suivant l'une quelconque des revendications 1 à 3, caractérisé en ce que les roues motrices (6') sont accouplées avec les autres roues (6) par l'intermédiaire de roues dentées (16) et de chaînes (17), ainsi que d'un embrayage (18) prévu sur l'essieu moteur (1), ou encore par l'intermédiaire de courroies ou de trains d'engrenages ou au moyen de renvois d'angle et de cardans, les autres roues (6) pouvant également être entraînées chacune directement par des moteurs indépendants, ou par liaison des essieux par un arbre de transmission, les roues motrices (6') pouvant, en outre, être freinées ou bloquées individuellement pour réaliser un changement de direction.

5. Véhicule, suivant la revendication 1, caractérisé en ce que les éléments gonflables (10 à 13) sont gonflés au moyen d'une pompe ou des gaz d'échappement au moyen d'un dispositif de captation adapté, et leur dégonflage s'effectue, soit au moyen de valves, soit au moyen d'un tube Venturi coopérant avec les gaz d'échappement pour créer un effet de succion, la rétraction des éléments en position de non-utilisation étant avantageusement réalisée au moyen d'éléments élastiques de traction (19) disposés à l'intérieur des éléments gonflables (10 à 13), et en ce que l'élément gonflable central (10) est protégé par une plaque rigide (20) dont les bords sont relevés, en particulier à l'avant et à l'arrière, et qui prend ledit élément (10) en sandwich entre lui et le châssis.

6. Véhicule, suivant l'une quelconque des revendications 1 et 5, caractérisé en ce que l'élément gonflable central (10) est avantageusement constitué par deux compartiments séparés par une paroi centrale longitudinale (21).

7. Véhicule, suivant l'une quelconque des revendications 1 à 6, caractérisé en ce que seules les roues (6) des essieux supplémentaires (3 et 4) sont munies de chenilles (5), ces essieux pouvant être relevés ou abaissés ensemble avec les chenilles, ou sans les chenilles lorsque ces dernières ne sont pas montées.

8. Véhicule, suivant l'une quelconque des revendications 1 et 3 à 7, caractérisé en ce que les roues (6) sont disposées sous le châssis du véhicule.

9. Véhicule, suivant l'une quelconque des revendications 1 à 8, caractérisé en ce que les essieux supplémentaires (22, 25) constituent avec deux longerons (23) un faux-châssis pouvant être fixé de manière démontable sous le châssis (24) du véhicule, les moyeux d'au moins l'un des deux essieux d'extrémité (25) étant munis chacun d'un barbotin (26) entraîné avec démultiplication par la roue motrice correspondante (28) par l'intermédiaire d'un embrayage (28') et d'un jeu de roues à chaînes (29) et de chaînes (30), ou de poulies et de courroies montés sur une genouillère, ou de renvois d'angle avec arbre télescopique, ou directement par un moteur indépendant électrique, pneumatique, ou hydraulique pour chaque barbotin (26).

10. Véhicule, suivant la revendication 9, caractérisé en ce que les roues (27) des essieux supplémentaires (22) sont à suspension indépendante, et en ce que ces essieux (22) peuvent être pivotés en positions d'utilisation et de non-utilisation sur le faux-châssis (23) par un dispositif de basculement verrouillable.

11. Véhicule, suivant la revendication 9, caractérisé en ce que chaque chenille (31) présente, en position d'utilisation, une section longitudinale trapézoïdale, et elle est soutenue dans cette position par des supports longitudinaux de glissement (32), qui présentent, entre deux essieux (22), un espace permettant le passage du mou (33) de la chenille (31) en position de non-utilisation de cette dernière, les supports (32) servant, en outre, à la fixation de flotteurs pour une utilisation en véhicule amphibie, et en ce que pour rattraper le mou en position de non-utilisation des chenilles, il est prévu un dispositif (34) d'appui sur les chenilles par le haut entre deux roues (27), tel qu'un vérin, coopérant avec des taquets (35) de maintien de la chenille, ces taquets pouvant être commandés manuellement ou par vérins, et un dispositif annexe de rattrapage de mou, tel qu'un élément élastique (36) ou un tendeur mécanique, peut encore être fixé entre les brins des chenilles (31).

12. Véhicule, suivant la revendication 9, caractérisé en ce que l'essieu moteur (25) est monté sur les longerons (23) au moyen d'un dispositif de tension permettant de régler la tension de la chaîne de transmission (30), ou d'une courroie, et en ce que l'essieu d'extrémité (25) non moteur est fixé sur le faux-châssis de manière à permettre le réglage de la tension des chenilles.

13. Véhicule, suivant l'une quelconque des revendications 9 à 12, caractérisé en ce qu'en position de non-utilisation, une ou deux encoches (37) pratiquées dans les chenilles (31) permettant la libre orientation des roues de direction, et ces encoches peuvent être réglées en position grâce à deux repères (38) matérialisés sur la face intérieure de chaque chenille, et qui doivent être mis en correspondance au niveau du rattrapage du mou, ces repères pouvant être combinés avec des moyens d'accrochage d'un élément élastique (36).

14. Véhicule, suivant l'une quelconque des revendications 9 à 13, caractérisé en ce que, pour une utilisation en tout-terrain non chenillé, c'est-à-dire les chenilles (31) étant démontées, les roues (27) sont entraînées par l'intermédiaire d'un embrayage (39) et d'un jeu de roues à chaînes jumelées (40) dont l'une est commandée par un jeu de chaînes (41) entraînées par l'intermédiaire de l'embrayage (39) par l'arbre moteur, et l'autre est reliée par une chaîne (42) à une roue à chaîne (43) solidaire de la roue (27), les chaînes (41) étant tendues au moyen de tendeurs (44), et le débattement des roues intermédiaires (27) restant totalement indépendant.

15. Véhicule, suivant l'une quelconque des revendications 9 et 12, caractérisé en ce que l'essieu (25) des barbotins (26) formant l'arbre moteur est muni de freins (45) à disque, ou à tambour, ou autre, pouvant être actionnés séparément à partir du poste de pilotage, permettant de réaliser la direction du véhicule en configuration tout-terrain, et servant de frein de sécurité en cas de rupture de la chaîne cinématique d'entraînement.

16. Véhicule, suivant l'une quelconque des revendications 9, 10, 14 et 15, caractérisé en ce que les moyeux des roues supplémentaires (27) et les moyeux des barbotins (26) peuvent être équipés de roues multiples ou de roues à bandage très large pour augmenter la surface de contact au sol, ou pour augmenter la flottabilité et la propulsion sur l'eau.

## Claims

1. Cross-country and amphibious vehicle provided with at least two axles (1, 2), whereof at least one is a driving axle and provided with one or more supplementary axles (3, 4) with independent wheels (6) which can be raised and detached in the case of non-use, a caterpillar (5) being stretched over at least one pair of wheels (6) on either side of the vehicle, characterized in that it is obtained by the temporary conversion of a conventional motor vehicle, in that the hubs (7) of each train of wheels (6) connected by a caterpillar (5) are connected to one another by a girder (8), which is articulated or has a certain flexibility, said hubs being mounted so as to pivot around the axes of the axles (3, 4) in that the driving wheels (6') of the vehicle are provided with a tyre (9) having a relief co-operating with a corresponding relief on the inside of the caterpillars (5), which are detachable with a view to a conversion into a caterpillared cross-country vehicle, and in that it is provided beneath its chassis, in the front and rear part, as well as on the sides with inflatable members (10 to 13) which can act as floats.

2. Vehicle according to claim 1, characterized in that its gauge is increased by adding a distance sleeve (14) to the hub (7) of each wheel (6).

3. Vehicle according to claim 1, characterized in that each of the caterpillars (5) is advantageously constituted by a high strength, reinforced, plasticized or rubber cloth provided at regular intervals with cross-members (15) and preferably having a trapezoidal longitudinal section, bringing about the engagement of the caterpillars (5) with the ground, or the propulsion on water, whereby the inner bar thereof for fixing to the caterpillars (5) can co-operate in the drive with the tyres (9) of the driving wheels (6), whereby, said tyres (9) are advantageously in the form of covers of special pneumatic tyres or sprocket wheels, or toothed or notched flanges of driving wheels (6').

4. Vehicle according to any one of claims 1 to 3, characterized in that the driving wheels (6') are coupled to the other wheels (6) by means of toothed wheels (16) and chains (17), as well as a clutch (18) provided on the driving shaft (1), or by means of gear trains or belts or angle gear boxes and gimbal joints, whereby the other wheels (6) can also be driven in each case directly by independent motors, or by the connection of the axles by a transmission shaft, whereby the driving wheels (6') can also be individually braked or locked to bring about a direction change.

5. Vehicle according to claim 1, characterized in that the inflatable members (10 to 13) are inflated by means of a pump or the exhaust gases using an appropriate collecting device, and their deflation takes place either by means of valves, or by means of a venturi tube co-operating with the exhaust gases to produce a suction effect, the retraction of the members into the non-use position being advantageously carried out by elastic tension members (19) positioned within the inflatable members (10 to 13) and in that the central inflatable member (10) is protected by a rigid plate (20), whose edges are raised, particularly to ✓ the front and rear and which sandwiches member (10) between it and the chassis.

6. Vehicle according to any one of claims 1 and 5, characterized in that the central inflatable member (10) is advantageously constituted by the compartments separated by a longitudinal central wall (21).

7. Vehicle according to any one of claims 1 to 6, characterized in that only the wheels (6) of the supplementary axles (3, 4) are provided with caterpillars (5), whereby said axles can be raised or lowered together with the caterpillars or without the caterpillars when the latter are not fitted.

8. Vehicle according to any one of claims 1 and 3 to 7, characterized in that the wheels (6) are positioned beneath the vehicle chassis.

9. Vehicle according to any of claims 1 to 8, characterized in that the supplementary axles (22, 25) form with two longitudinal girders (23) a subframe which can be detachably fixed beneath the vehicle chassis (24), the hubs of at least one of the two end axles (25) being in each case provided with a sprocket wheel (26) driven with reduction by the corresponding driving wheel (28) via a clutch (28') and a set of chain wheels (29) and chains (30), or pulleys and belts mounted on a knuckle joint or angle gear boxes with a telescopic shaft or directly by an independent electric common pneumatic or hydraulic motor for each sprocket wheel (26).

10. Vehicle according to claim 9, characterized in that the wheels (27) of the supplementary axles (22) have an independent suspension and in that said axles (22) can be pivoted into use and non-use positions on subframe (23) by a lockable swinging device.

11. Vehicle according to claim 9, characterized in that each caterpillar (31) has, in the use position, a trapezoidal longitudinal section and is supported in said position by longitudinal sliding supports (32) which, between two axles (22), have a space permitting the passage of the slack (33) of caterpillar (31) in the non-use position of the latter, said supports (32) also being used for the fixing of floats for use as an amphibious vehicle and in that for taking up the slack in the non-use position of the caterpillars, a device (34) is provided for bearing from the top on the caterpillars between two wheels (27), such as a jack, co-operating with brackets (35) for holding the caterpillar, whereby said brackets can be manually controlled or controlled by jacks, as well as with an auxiliary slack take-up device, such as an elastic element (36) or a mechanical tightener can be fixed between the sides of the caterpillars (31).

12. Vehicle according to claim 9, characterized in that the driving axle (25) is mounted on the longitudinal girders (23) by means of a tension device making it possible to regulate the tension of transmission chain (30) or of a belt and in that the non-driving end axle (25) is fixed to the subframe so as to make it possible to regulate the tension of the caterpillars.

13. Vehicle according to any one of claims 9 to 12, characterized in that in the non-use position, one or both notches (37) made in caterpillars (31) permit the free orientation of the driving wheels and said notches can undergo position regulation by means of two reference marks (38) on the inner face of each caterpillar and which must be made to correspond on taking up the slack, whereby said reference marks can be combined with means for the attachment of an elastic member (36).

14. Vehicle according to one of claims 9 to 13, characterized in that for a cross-country use without caterpillars, i. e. with caterpillars (31) removed, the wheels (27) are driven by means of a clutch (39) and a set of twin chain wheels (40), whereof one is controlled by a set of chains (41) driven via clutch (39) by the driving shaft, whilst the other is connected by a chain (42) to a chain wheel (43) integral with wheel (27), the chains (41) being stretched by means of tighterners (44) and the clearance of the intermediate wheels (27) remaining totally independent.

15. Vehicle according to any one of claims 9 and 12, characterized in that the axle (25) of the sprocket wheels (26) forming the driving shaft is provided with disc or drum brakes (45) or the like, which can be separately operated from the driving cab making it possible to guide the vehicle in the cross-country configuration and serving as a safety brake in the case of a fracture of the transmission system mechanism.

16. Vehicle according to any one of claims 9, 10, 14 and 15, characterized in that the hubs of the supplementary wheels (27) and the hubs of the sprocket wheels (26) can be equipped with multiple wheels or wheels with very wide tyres for increasing the ground contact surface and for increasing the floatability or buoyancy and the propulsion on water.

**Patentansprüche**

1. Gelände- und Amphibien-Kraftfahrzeug, ausgestattet mit mindestens zwei Radachsen (1, 2), wovon mindestens eine (1) antreibend ist, und mit einer oder mehreren Zusatzachsen (3, 4) mit eingenständigen Rädern (6), die eingezogen werden können und bei Nicht-Benutzung abnehmbar sind, versehen, wobei eine Raupe (5) über mindestens ein Paar Räder (6) auf jeder Seite des Fahrzeugs gespannt, wird, dadurch gekennzeichnet, daß es durch Umwandlung eines klassischen Fahrzeugs hergestellt wird, daß die durch eine Raupe (5) verbundenen Naben (7) jedes Radsatzes (6) untereinander mit einem gelenkigen oder eine gewisse Beweglichkeit aufweisenden Träger (8) verbunden sind, wobei diese Naben (7) um die Achsen der Radachsen (3, 4) schwingend montiert sind, daß die Triebräder (6') des Frahrzeugs mit einer Bereifung (9) versehen sind, die ein Relief aufweist, das mit einem entsprechenden Relief an der Innenseite der Raupen (5), welche im Hinblick auf eine Umwandlung in ein Geländefahrzeug mit Kettenantrieb abnehmbar sind, zusammenwirkt, und daß es unter seinem Fahrgestell, an seinem vorderen und rückwärtigen Teilen sowie an den Seiten mit aufblasbaren Elementen (10 bis 13), die als Schwimmkörper dienen können, ausgestattet ist.

2. Fahrzeug nach Anspruch 1, dadurch gekennzeichnet, daß seine Spurweite durch Anfügen eines Zwischenstücks (14) an die Nabe (7) jedes Rades (6) vergrößert wird.

3. Fahrzeug nach Anspruch 1, dadurch gekennzeichnet, daß die Raupen (5) vorteilhaft jeweils aus verstärktem, hochwiderstandsfähigem, kunstoffüberzogenem oder gummiertem Gewebe bestehen, das in regelmäßigen Abständen mit Traversen (15), vorzugsweise mit trapezförmigen Längsschnitt, ausgestattet ist, welche das Haften der Raupenketten (5) auf dem Boden, oder auch den Vortrieb auf dem Wasser bewerkstelligen, und ihre Innenschiene zur Befestigung auf den Raupen (5) beim Antrieb mit der Bereifung (9) der Triebräder (6') zusammenwirken kann, wobei diese Bereifung vorteilhaft in Form von Mänteln von Spezialreifen oder Gliederketten, oder gezähnten oder gerippten Flanschen, die mit den Triebrädern (6') fest verbunden sind, ausgeführt sein kann.

4. Fahrzeug nach einem der Ansprüche 1 bis 3, dadurch gekennzeichnet, daß die Triebräder (6') mit den anderen Rädern (6) mit Hilfe von Zahnrädern (16) und Ketten (17) sowie einer auf der Antriebsachse (1) vorgesehene Kupplung (18) gekoppelt sind, oder auch mit Hilfe von Treibriemen oder Gruppengetrieben oder mittels Winkelgetrieben und Kardanen, während die anderen Räder (6) ebenfalls direkt durch je einen eigenständigen Motor, oder durch Verbindung der Radachsen durch eine Transmissionswelle angetrieben werden können, wobei die Triebräder (6') außerdem, um eine Richtungsänderung durchzuführen, einzeln gebremst oder blockiert werden können.

5. Fahrzeug nach Anspruch 1, dadurch gekennzeichnet, daß die aufblasbaren Elemente (10 bis 13) mittels einer Pumpe oder Auspuffgasen über eine geeignete Auffangvorrichtung aufgeblasen werden, und das Ablassen entweder über Ventile oder eine Venturirohr, das mit den Abgasen zusammenwirkt, um einen Saugeffekt zu erzeugen, erfolgt, wobei das Einziehen der Elemente in Nicht-Benutzungsstellung vorteilhaft mit Hilfe von elastischen, im Inneren der aufblasbaren Elemente (10 bis 13) angeordneten Zugelementen (19) durchgeführt wird, und daß das mittlere, aufblasbare Element (10) durch eine starre Platte (20) geschützt ist, deren Ränder, besonders vorne und hinten, hochgezogen sind, und welche das besagte Element (10) sandwichartig zwischen sich und dem Fahrgestell aufnimmt.

6. Fahrzeug nach einem der Ansprüche 1 und 5, dadurch gekennzeichnet, daß das mittlere, aufblasbare Element (10) vorteilhaft aus zwei Abteilungen besteht, die durch eine mittlere Längswand (21) getrennt sind.

7. Fahrzeug nach einem der Ansprüche 1 bis 6, dadurch gekennzeichnet, daß nur die Räder (6) der Zusatzachsen (3 und 4) mit Raupen ausgestattet sind, wobei diese Achsen zusammen mit den Raupen angehoben oder gesenkt werden können, oder ohne die Raupen, wenn diese nicht montiert sind.

8. Fahrzeug nach einem der Ansprüche 1 und 3 bis 7, dadurch gekennzeichnet, daß die Räder (6) unter dem Fahrgestell des Fahrzeugs angeordnet sind.

9. Fahrzeug nach einem der Ansprüche 1 bis 8, dadurch gekennzeichnet, daß die Zusatzachsen (22, 25) mit zwei Längsträgern (23) ein Nebenchassis bilden, das abnehmbar unter dem Fahrgestell (24) des Fahrzeugs befestigt werden kann, wobei die Naben von mindestens einer der beiden Endachsen (25) jeweils mit einem Kettenstern (26) versehen sind, welcher mit Übersetzung durch das entsprechende Triebrad (28) mit Hilfe einer Kupplung (28') und einem Satz Kettenräder (29) und Ketten (30) oder mit auf ein Kniegelenk montierten Antriebsscheiben und Treibriemen, oder Winkelgetrieben mit Teleskopwelle, oder direkt durch einen eigenständigen Elektro-, Druckluft- oder Hydraulikmotor für jeden Kettenstern (26) angetrieben wird.

10. Fahrzeug nach Anspruch 9, dadurch gekennzeichnet, daß die Räder (27) der Zusatzachsen (22) einzeln aufgehängt sind, und daß diese Achsen (22) in Benutzungs- und Nicht-Benutzungsstellung auf dem Nebenchassis (23) mittels einer verriegelbaren Kippvorrichtung geschwenkt werden können.

11. Fahrzeug nach Anspruch 9, dadurch gekennzeichnet, daß jede Raupe (31) in Benutzungsstellung einen trapezförmigen Längsschnitt aufweist, und sie in dieser Position durch längsgerichtete Gleitauflagen (32) abgestützt wird, welche zwischen zwei Radachsen (22) einen Zwischenraum aufweisen, der die Durchführung der Lose (33) der Raupe (31) in Nicht-Benutzungsstellung dieser letzteren ermöglicht, wobei die Gleitauflagen (32) außerdem zur Befestigung von Schwimmkörpern für eine Verwendung als Amphibienfahrzeug dienen, und daß, um die Lose in Nicht-Benutzungsstellung der Raupen nachzuspannen, eine Vorrichtung (34) zum Aufdruck auf die Raupen von oben zwischen zwei Rädern (27) vorgesehen ist, wie z. B. ein Zylinder, der mit Nasen (35) zum Halten der Kette zusammenwirkt, wobei diese Nasen manuell oder durch Zylinder betätigt werden können, und eine Nebenvorrichtung zum Nachspannen der Lose, wie z. B. ein elastisches Element (36) oder ein mechanischer Spanner auch noch zwischen den Trumen der Raupen (31) befestigt werden kann.

12. Fahrzeug nach Anspruch 9, dadurch gekennzeichnet, daß die Antriebsachse (25) auf die Längsträger (23) mit Hilfe einer Spannvorrichtung montiert ist, welche das Einstellen der Spannung der Transmissionskette (30), oder eines Treibriemens ermöglicht, und daß die nicht antreibende Endachse (25) auf dem Nebenchassis befestigt ist, um die Einstellung der Spannung der Raupen zu ermöglichen.

13. Fahrzeug nach einem der Ansprüche 9 bis 12, dadurch gekennzeichnet, daß in Nicht-Benutzungsstellung eine oder zwei in die Raupen (31) eingearbeitete Vertiefungen (37) eine freie Ausrichtung der Leiträder ermöglichen, und diese Vertiefungen dank zweier and der Innenseite jeder Raupe angebrachter Markierungen (38) in Position gebracht werden können, und die auf Höhe der Nachspannung der Lose in Übereinstimmung gebracht werden müssen, wobei diese Markierungen mit Befestigungsmitteln eines elastischen Elements (36) kombiniert werden können.

14. Fahrzeug nach einem der Ansprüche 9 bis 13, dadurch gekennzeichnet, daß für eine Verwendung als Geländefahrzeug ohne Raupen, das heißt bei abmontierten Raupen (31), die Räder (27) mit Hilfe einer Kupplung (39) und einem Satz Zwillings-Kettenrädern (40) angetrieben werden, wovon das eine durch einen mit Hilfe der Kupplung (39) von der Antriebswelle angetriebenen Kettensatz (41) gesteuert wird, und das andere über eine Kette (42) mit einem mit dem Rad (27) fest verbundenen Kettenrad (43) verbunden ist, wobei die Ketten (41) mittels Spannern (44) gespannt werden, und der Durchfederungsweg der Zwischenräder (27) völlig unabhängig bleibt.

15. Fahrzeug nach einem der Ansprüche 9 und 12, dadurch gekennzeichnet, daß die Radachse (25) der Kettensterne (26), welche die Antriebswelle bildet, mit Bremsen (45), Scheiben- oder Trommelbremsen oder ähnlichem, ausgestattet ist, welche einzeln von dem Führerstand aus betätig werden können, die Lenkung des Fahrzeugs in Geländeausrüstung ermöglichen, und als Sicherheitsbremse bei Bruch der kinematischen Triebkette dienen.

16. Fahrzeug nach einem der Ansprüche 9, 10, 14 und 15, dadurch gekennzeichnet, daß die Naben der Zusatzräder (27) und die Naben der Kettensterne (26) mit Mehrfachrädern oder Rädern mit sehr breiter Bereifung, um die Kontaktfläche auf dem Boden zu vergrößern oder um die Schwimmfähigkeit und den Vortrieb auf dem Wasser zu erhöhen, ausgestattet sein können.

Fig.1

Fig.2

Fig.3

0 060 209

Fig.4

11

13

5

5

12

Fig.5

1

3

4

2

6'

5

6

2

0 060 209

# Fig. 6

# Fig. 7

# Fig. 8

3

0 060 209

Fig. 9

Fig. 10

4